# EUROPÄISCHE PATENTSCHRIFT

(11) **EP 1 634 261 B1**
(45) Veröffentlichungstag und Bekanntmachung des Hinweises auf die Patenterteilung: **18.10.2006**
(21) Anmeldenummer: 04764427.3
(22) Anmeldetag: 24.08.2004
(51) Int. Cl.: G08B 17/00, G01N 1/26, G08B 29/26

(54) **VERFAHREN UND VORRICHTUNG ZUM ERKENNEN UND LOKALISIEREN EINES BRANDES**
METHOD AND DEVICE FOR IDENTIFYING AND LOCALISING A FIRE
PROCEDE ET DISPOSITIF POUR RECONNAITRE ET LOCALISER UN INCENDIE

(30) Priorität: 20.10.2003 DE 10348565
(43) Veröffentlichungstag der Anmeldung: 15.03.2006
(73) Patentinhaber: Wagner Alarm- und Sicherungssysteme GmbH, 30853 Langenhagen (DE)
(72) Erfinder: REINECKE, Claus-Peter, 30900 Wedemark (DE); SIEMENS, Andreas, 30880 Laatzen (DE)
(74) Vertreter: Rupprecht, Kay
(86) Internationale Anmeldenummer: PCT/EP2004/009450
(87) Internationale Veröffentlichungsnummer: WO 2005/048207

(56) Entgegenhaltungen:
- DE-A- 4 125 739
- DE-A- 10 125 687
- US-A- 5 103 212
- US-A- 5 552 775
- US-B1- 6 425 297

## Beschreibung

Die Erfindung betrifft ein Verfahren zum Erkennen und Lokalisieren eines Brandes und/oder der Entstehung eines Brandes in einem oder mehreren Überwachungsräumen sowie eine Vorrichtung zur Durchführung des Verfahrens.

Ausgangspunkt ist eine Branderkennungsvorrichtung mit einem Detektor zum Erkennen einer Brandkenngröße, dem durch ein Ansaugrohrsystem mittels einer Ansaugvorrichtung, wie etwa einem Lüfter, ein repräsentativer Volumenteil einer Raum- oder Geräteluft zugeführt wird.

Unter dem Begriff "Brandkenngröße" werden physikalische Größen verstanden, die in der Umgebung eines Entstehungsbrandes messbaren Veränderungen unterliegen, z.B. die Umgebungstemperatur, der Feststoff- oder Flüssigkeits- oder Gasanteil in der Umgebungsluft (Bildung von Rauchpartikeln oder Rauchaerosolen od er Bildung von Dampf oder Brandgase) oder die Umgebungsstrahlung.

Sowohl Verfahren als auch Branderkennungsvorrichtungen der genannten Art sind bekannt und dienen der Frühesterkennung von Bränden bereits in Ihrer Entstehungsphase. Typische Anwendungsbereiche sind entweder Räume mit hochwertigen oder wichtigen Einrichtungen, wie z.B. Räume mit EDV- Anlagen in Banken oder dergleichen, oder aber die EDV- Anlagen selbst. Zu diesem Zweck werden der Raumluft oder der Gerätekühlluft ständig repräsentative Teilmengen entnommen, die im folgenden als "Luftprobe" bezeichnet werden. Ein probates Mittel zum Entnehmen dieser Luftprobe und zum Zuführen dieser zu dem Branddetektor bzw. zu dem Gehäuse des Branddetektors ist ein Ansaugrohrsystem in der Gestalt von Rohrleitungen, die beispielsweise unter der Raumdecke befestigt sind und zu der Lufteintrittsöffnung in dem Gehäuse des Branddetektors führen und die Luftprobe durch Ansaugöffnungen einsaugen, welche in dem Ansaugrohrsystem vorgesehen sind. Eine wichtige Vorraussetzung des Erkennen eines Entstehungsbrandes im frühsten Stadium besteht darin, dass die Branderkennungsvorrichtung ununterbrochen eine ausreichend repräsentative Luftmenge ansaugt und dem Detektor in der Melderkammer zuführen kann. Als Detektoren kommen beispielsweise punktförmige Rauchmelder zur Anwendung, welche die durch Rauchaerosole hervorgerufene Lichttrübung in einer Rauchkammer des Detektors messen, oder auch beispielsweise Streulichtdetektoren, welche im Ansaugweg integriert sind und die durch Rauchpartikel in einem Streulichtzentrum des Detektors hervorgerufene Lichtstreuung wahrnehmen.

Verfahren und Vorrichtungen zum Detektieren und Lokalisieren von Brandherden in einem oder mehreren Überwachungsräumen mit einer Vielzahl von Ansaugrohrsystemen sind aus dem Stand der Technik bekannt und wurden vor dem Hintergrund entwickelt, dass zum Beispiel in großen Hallen, Bürogebäude, Hotels oder Schiffen eine Lokalisierung des Brandherdes für die Löscheinsatzkräfte erhebliche Schwierigkeiten bereitet. Ein einzelnes Rauchansaugsystem mit einer einzigen Branddetektionseinheit darf - je nach nationalen Vorschriften - einen Bereich bis zu 2000 m² überwachen, der auch mehrere Räume umfassen kann. Um eine schnelle Lokalisierung des Alarmortes im Einsatzfall zu ermöglichen, wurden Anforderungen definiert, wie sie zum Beispiel in Deutschland in der "Richtlinie für automatische Brandmeldeanlagen, Planung und Einbau" (VdS 2095) niedergelegt wurden. Danach dürften in einem Meldebereich mehrere Räume nur dann zusammengefasst sein, wenn die Räume benachbart sind, ihre Zugänge leicht überblickt werden können, die Gesamtfläche 1000 m² nicht übersteigt und auch an der Brandmeldezentrale gut wahrnehmbare optische Alarmanzeiger vorhanden sind, die im Fall eines Brandalarms den vom Brand betroffenen Raum kennzeichnen.

Vorrichtungen zur Branderkennung, die auf einem aspirativen Funktionsprinzip basieren, bei welchem eine Vielzahl von zu überwachenden Räumen über ein einzelnes Rauchansaugsystem verbunden sind, bieten zwar den Vorteil der frühstmöglichen Banderkennung, jedoch kann eine Lokalisierung des Brandortes mit einem zur Überwachung der Vielzahl der Überwachungsräume gemeinsam verwendeten Ansaugrohrsystem nicht gewährleistet werden. Dies liegt daran, weil die einzelnen Luftproben, die jeweils die Raumluft der einzelnen Überwachungsräume repräsentieren, über das gemeinsam verwendete Ansaugrohrsystem vermischt dem Detektor zum Nachweisen einer Brandkenngröße zugeführt werden. Der Detektor kann somit lediglich nachweisen, dass in einem der Überwachungsräume ein Brand ausgebrochen ist bzw. ein Brand in Begriff ist, zu entstehen. Um ferner eine Lokalisierung des Brandherdes in einem der Überwachungsräume gewährleisten zu können, ist es in der Regel notwendig, die aus jedem einzelnen Überwachungsraum entnommene Luftprobe über ein jeweils separates Ansaugrohrsystem jeweils einem Detektor zum Nachweisen einer Brandkenngröße zuzuführen. Dieses hat jedoch den Nachteil, dass zur Überwachung einer Vielzahl von Überwachungsräumen eine entsprechende Anzahl von Ansaugrohrsystemen verlegt werden muss, was eine baulich und finanziell sehr aufwendige Implementierung des aspirativen Branderkennungssystems bzw. der Vielzahl der aspirativen Branderkennungssysteme nach sich zieht.

In der FR 2670010 A1 sind Melderboxen offenbart, die dazu dienen, den rauchansaugenden Ast in einem verzweigten Ansaugrohrsystem zu identifizieren. Diese Melderbox besteht aus einem in einem Gehäuse eingebauten, punktförmigen Rauchmelder mit Kabelverschraubung für den Anschluss der ankommenden und abgehenden Rohre und einer Kennleuchte auf dem Deckel. Nachteilig an dieser Ausführungsform ist allerdings, dass diese Melderboxen wegen ihrer Größe, ihrer Bauform und ihrem Preis nicht an jeder einzelnen Ansaugöffnung eingesetzt werden können.

Aus der WO 00/68909 ist ferner ein Verfahren und eine Vorrichtung zum Detektieren von Bränden in Überwachungsräumen bekannt, mittels derer eine Lokalisierung eines Brandherdes möglich ist. Hierzu benutzt das Verfahren und enthält die entsprechende Vorrichtung in jedem Überwachungsraum zwei sich dort kreuzende Rohrleitungen, mittels derer von einem oder mehreren Lüftern ständig Teilmengen der in dem Überwachungsraum enthaltenen Luft durch in den Rohrleitungen vorgesehene Ansaugöffnungen angesaugt und wenigstens einem Detektor zum Erkennen einer Brandkenngröße pro Rohrleitung zugeführt werden. Dabei erfolgt die Lokalisierung des Brandherdes durch ein Ansprechen beider den sich kreuzenden Rohrleitungen zugeordneten Detektoren. Mehrere Räume werden durch in Art einer Matrix in Spalten und Reihen angeordnete Rohrleitungen und gegebenenfalls je einem Sammeldetektor für die Spaltenanordnung und die Reihenanordnung überwacht. Ein Nachteil dieser bekannten Vorrichtung liegt allerdings in einem recht hohen Installationsaufwand für das matrixartige Rohrleitungssystem.

Auch aus der deutschen Patentschrift DE 3 237 021 C2 ist ein selektives Gas-/Rauchdetektionssystem mit einer Anzahl von separat und an verschiedenen Messstellen in einem zu überwachenden Raum angeschlossenen Absaugleitungen zum Entnehmen von Luft- oder Gasproben an diesen Messstellen bekannt. Dabei reagiert ein Gas- oder Rauchdetektor, welcher an diese Leitungen angeschlossen ist, auf das Vorhandensein eines bestimmten Gases in der Probe bei Überschreitung eines festgesetzten Schwellenwertes und gibt ein Detektionssignal ab, dass eine Anzeige und/oder Alarmschaltung steuert. Vorgesehen sind weiterhin an den einzelnen Absaugleitungen angeordnete Verschlussventile, welche durch einen Regelkreis zyklisch und periodisch gesteuert erregbar sind. Eine Branderkennung mittels dieses Gas- /Rauchdetektionssystems geschieht derart, dass die Steuereinheit bei Abwesenheit eines Detektionssignals die Verschlussventile derart einstellt, dass alle Ansaugleitungen gleichzeitig in offener Verbindung mit dem Detektor stehen, und bei Erhalt eines Detektionssignals auf eine Abtastweise umschaltet, bei der die Ansaugleitungen auf übliche Weise eine nach der anderen oder gruppenweise in offene Verbindung mit dem Detektor gebracht werden. Diese Arbeitsweise zur Erkennung eines Brandherdes setzt allerdings voraus, dass der Detektor über einzelne und selektiv zu öffnende Zuleitungen mit dem jeweils zu überwachenden Räumlichkeiten in Verbindung gebracht werden kann. Das bedeutet, dass notwendigerweise ein umfangreiches Rohrleitungssystem installiert werden muss, um diese einzelnen selektierbaren Verbindungen herstellen zu können. Nachteilig daran ist ebenfalls ein recht hoher Installationsaufwand für die notwendigen Ansaugleitungen.

Aus der WO 93/23736 ist weiterhin ein Luftverunreinigungs-/Raucherkennungsgerät auf der Grundlage eines netzförmig gestalteten Ansaugsystems mit einer großen Anzahl von Entnahmestellen bekannt, an welchen ein Gas aus dem jeweiligen zu überwachenden Raum entnommen wird. Dieses Luftverunreinigungs-/Raucherkennungsgerät verfügt über eine Anzahl von Einlassöffnungen, welche mit dem gitterförmigen Ansaugsystem in Verbindung stehen und einzeln überwacht werden. Unter normalen Umständen sind alle diese Einlassöffnungen geöffnet, bis vom Erkennungsgerät Luftverunreinigungen/Rauch erkannt werden. Durch selektives Schließen der Einlassöffnungen kann dann eine Eingrenzung und Erkennung der Brandzone vorgenommen werden. Aber auch die Arbeitsweise dieses Erkennungsgerätes setzt eine umfangreiche Installation von Ansaugleitungen voraus, welche eine gitterförmige Struktur bilden müssen, um eine sichere Erkennung eines Brandherdes zu gewährleisten. Auch hier ist der Nachteil dieser bekannten Vorrichtung in einem hohen Installationsaufwand für das Rohrleitungssystem zu sehen.

Aus der DE 101 25 687 A1 ist ferner eine Vorrichtung zum Detektieren und Lokalisieren von Brandherden in einem oder mehreren Überwachungsräumen bekannt. Jene Vorrichtung weist einen Haupt- Detektor zum Detektieren einer Brandkenngröße auf, in dem über eine in jedem Überwachungsraum angeordnete und mit Ansaugöffnungen versehene Rohrleitung mittels einer Ansaugeinheit ständig eine Teilmenge der in den Überwachungsräumen enthaltenen Raumluft zugeführt wird. Dabei ist vorgesehen, dass an oder im Bereich wenigstens eine Ansaugöffnung pro Überwachungsraum je ein Sub- Detektor angeordnet ist, welcher durch eine Steuerung in Abhängigkeit eines vom Hauptdetektor abgegebenen Detektionssignal durch ein Einschaltsignal eingeschaltet wird. Der eingeschaltete Sub- Detektor dient dabei zum Erkennen des Brandherdes und somit zum Lokalisieren des Brandherdes aus der Vielzahl der Überwachungsräume. Diese aus dem Stand der Technik bekannte Vorrichtung weist die Nachteile auf, dass aufgrund der Vielzahl der eingesetzten Sub- Detektoren die Kosten der Branderkennungsvorrichtung relativ hoch sind und ferner eine relativ aufwendige Verdrahtung der Sub-Detektoren bei der Installation der Vorrichtung erforderlich wird.

Eine Aufgabe der vorliegenden Erfindung liegt darin, eine Vorrichtung und ein Verfahren zum Detektieren von Brandherden anzugeben, welche die Vorteile bekannter Rauch- und Gasansaugsysteme, die aktive Ansaugung und versteckte Montage, mit dem Vorteil der Lokalisierung jeder einzelnen betroffenen Ansaugöffnung verbindet und damit die Detektion eines konkreten Brandherdes oder einer konkreten Gasverunreinigung, die bei der Entstehung eines Brandherdes auftritt, in einfacher und kostengünstiger Weise ermöglicht. Eine weitere Aufgabe der vorliegenden Erfindung besteht darin, eine Feuerlöschanlage anzugeben, die eine aspirative Branderkennungsvorrichtung aufweist, mit der sowohl eine zuverlässige Branderkennung als auch eine Lokalisierung des Brandortes aus einer Vielzahl von Überwachungsräumen möglich wird, wobei die Branderkennungsvorrichtung auf den Einsatz einer Vielzahl von Ansaugrohrsystemen, die die einzelnen Überwachungsräume mit einem Detektor zum Nachweisen einer Brandkenngröße verbinden, verzichten kann.

Diese Aufgabe wird erfindungsgemäß durch ein Verfahren gemäß Anspruch 1 und eine Vorrichtung gemäß Anspruch 10 gelöst.

Die verwendungstechnische Aufgabe wird durch die Verwendung der erfindungsgemäßen Vorrichtung als Branderkennungsteil einer Feuerlöschanlage zur Aktivierung der Löschmitteleinleitung in einem der Überwachungsräume gelöst.

Ein wesentlicher Punkt der vorliegenden Erfindung besteht darin, dass ausgehend von der in der Regel schon im großen Umfang erfolgten Installation von Rauch- oder Gasansaugsystemen - auch aspirative Überwachungssysteme genannt - nur eine einfache und kostengünstige Nachrüstung zur Einzelerkennung von Brandherden oder Gasverunreinigungen unter den Gesichtspunkten bestehender Normen technisch sinnvoll sein kann. Gleichzeitig soll vermieden werden, dass durch eine geeignete Nachrüstung zur Erfüllung der gewünschten Sicherheitsstandards erhöhte Anschaffungs- und Betriebskosten verursacht werden. Die Vorteile der Erfindung liegen insbesondere darin, dass nicht nur die Forderungen nach einfacher Nachrüstung bestehender aspirativer Systeme bei gleichzeitig geringen Betriebskosten durch ein besonders einfach zu realisierendes und dabei sehr effektives Verfahren zur Erkennung und Lokalisierung des Brandes und/oder der Entstehung des Brandes in einem aus einer Vielzahl von Überwachungsräumen erzielbar ist, sondern auch sich dank der Lokalisierung des Brandortes über das erfindungsgemäße Verfahren neue Anwendungen für Rauchansaugsysteme eröffnen. So kann insbesondere nun auf die bisher beispielsweise in Gebäuden mit einer Vielzahl einzelner Räume eingesetzte Vielzahl einzelner punktförmiger Brandmelder verzichtet werden. Mit dem erfindungsgemäßen Verfahren ist es möglich, einen Brand bzw. die Entstehung eines Brandes in einem Überwachungsraum zuverlässig zu erkennen und diesen Überwachungsraum aus einer Vielzahl von Überwachungsräumen durch den Einsatz von lediglich einem Ansaugrohrsystem, einem Detektor zum Nachweis einer Brandkenngröße und einer Ansaug-/Ausblasvorrichtung zu lokalisieren. Dadurch kann auch auf eine aufwändige Installation einer Vielzahl von Ansaugrohrsystemen in Kombination mit einer Vielzahl von Detektoren verzichtet werden, was in vorteilhafter Weise den baulichen Aufwand für den Einbau oder für das Nachrüsten einer Vielzahl von Überwachungsräumen mit einer derartigen Branderkennungsvorrichtung deutlich reduziert. Durch die Tatsache, dass die Branderkennung und die Brandlokalisierung auf einem aspirativen Funktionsprinzip basiert, ist dieses Verfahren äußerst sensibel und insbesondere unabhängig im Hinblick auf räumliche Höhen und hohe Luftgeschwindigkeiten in den einzelnen Überwachungsräumen. Große Deckenhöhen oder höhere Luftgeschwindigkeiten führen nämlich beispielsweise bei klimatisierten Räumen zu einer starken Rauchverdünnung. Augrund der hohen Detektionssensibilität des erfindungsgemäßen Branderkennungs- und Brandlokalisierungsverfahrens ist dieses weitgehend unabhängig von diesen Parametern. Des weiteren bietet das erfindungsgemäße Verfahren den Vorteil, dass ein Brand bzw. die Entstehung eines Brandes unabhängig von Störeinflüssen wie Staub, Schmutz, Feuchtigkeit oder extremen Temperaturen in den einzelnen Überwachungsräumen zuverlässig erkannt und lokalisiert werden kann. Auch ermöglicht das erfindungsgemäße Verfahren, dass lediglich ein einziges Ansaugrohrsystem zum Einsatz kommt, welches nahezu unsichtbar in die Gebäudearchitektur integriert werden kann, so dass ästhetischen Belangen voll und ganz Rechnung getragen werden kann.

Durch das Ausblasen der angesaugten und sich im Ansaugrohrsystem befindlichen Luftproben, nachdem zumindest eine Brandkenngröße in der über das Ansaugrohrsystem angesaugten Luftprobe mit dem Detektor zum Nachweisen von Brandkenngrößen nachgewiesen wurde, wird erreicht, dass sich dann in dem gesamten Ansaugrohrsystem Frischluft befindet, d.h. Luft, die mit Sicherheit keine Brandkenngröße mehr aufweist. Im Anschluss an das Ausblasen wird erneut jeweils eine die Raumluft der einzelnen Überwachungsräume repräsentierende Luftprobe aus den einzelnen Überwachungsräumen über das Ansaugrohrsystem entnommen. Ein wesentlicher Punkt des erfindungsgemäßen Verfahrens besteht nun darin, die Laufzeit zu messen, bzw. bestimmte Laufzeitwerte zugrunde zu legen, bis der Detektor erneut eine Brandkenngröße in den über das gemeinsame Ansaugrohrsystem angesaugten Luftproben nachweist. Diese Laufzeit wird anschließend ausgewertet, um den Brandort oder den Ort der Entstehung des Brandes zu lokalisieren, basierend auf der Tatsache, dass jeder einzelne Überwachungsraum eine bestimmte Entfernung vom Detektor und eine auch vom Ansaugrohrsystem abhängige Laufzeit aufweist.

Mit der erfindungsgemäßen Vorrichtung wird eine Möglichkeit zur Durchführung des vorstehend beschriebenen Verfahrens angegeben. Hierbei ist vorgesehen, dass mit Hilfe einer Ansaugvorrichtung über das Ansaugrohrsystem, welches über Ansaugöffnungen mit jedem einzelnen Überwachungsraum kommuniziert, aus den einzelnen Überwachungsräumen jeweils die Raumluft der einzelnen Überwachungsräume repräsentierende Luftproben entnommen und anschließend den Detektor zugeführt werden. Selbstverständlich können bei der erfindungsgemäßen Vorrichtung auch mehrere Detektoren zum Nachweisen einer Brandkenngröße eingesetzt werden, um die Ausfallwahrscheinlichkeit des Detektors herabzusetzen. Denkbar wäre auch, dass ein Detektor für eine bestimmte Brandkenngröße und ein anderer Detektor für eine andere Brandkenngröße zum Einsatz kommt. Die erfindungsgemäße Vorrichtung bietet insbesondere den Vorteil bei Instandhaltung und Service. Durch den Einsatz von lediglich einem Detektor, einer Ansaugvorrichtung und einer Ausblasvorrichtung, die sich außerhalb der Überwachungsräume in einem separaten Raum anordnen lassen und damit für Wartungspersonal gut erreichbar werden, wird zum einen der gesamte Wartungsaufwand deutlich reduziert, zum anderen muss das Wartungs- und Servicepersonal die jeweiligen Überwachungsräume nicht betreten, was insbesondere bei Reinsträumen, Schiffskabinen oder Gefängniszellen ein wichtiger Aspekt ist. In einer besonders bevorzugten Ausführungsform weist die erfindungsgemäße Vorrichtung ferner einer Kommunikationseinrichtung auf, über welche Information hinsichtlich der Entstehung und/oder das Vorhandensein eines Brandes in einem oder mehreren der Überwachungsräume und hinsichtlich der eindeutigen Lokalisierung des Brandes in dem einen oder den mehreren Überwachungsräumen zu einer von der Vorrichtung entfernten Stelle übertragen wird. Eine von der Vorrichtung entfernte Stelle kann in diesem Zusammenhang beispielsweise eine Brandmeldezentrale oder eine Leitstelle für Einsatzkräfte sein. Die Kommunikationseinrichtung stellt dabei beispielsweise entweder eine drahtgestützte oder eine funkgestützte Kommunikationsmöglichkeit bereit, die im Brandfall ein entsprechendes Signal, in dem die relevante Information enthalten ist, an einen zugehörigen Empfänger abgibt. Jene Kommunikationseinrichtung kann selbstverständlich aber auch selber angesteuert werden, um etwa einen Betriebszustand der Vorrichtung zu ändern oder zu überprüfen. Als mögliches Kommunikationsmedium kommt ferner die IR-Technologie in Frage.

Bevorzugte Weiterbildungen der Erfindung sind bezüglich des Verfahrens in den Unteransprüchen 2 bis 9 und bezüglich der Vorrichtung in den Unteransprüchen 11 bis 20 angegeben.

So ist für das Verfahren bevorzugt vorgesehen, dass während der Entnahme der jeweiligen Luftproben aus den einzelnen Überwachungsräumen die Strömungsgeschwindigkeit der Luftprobe im Ansaugrohrsystem ermittelt wird. Diese Strömungsgeschwindigkeit dient dann dazu, eine zum vollständigen Ausblasen der sich im Ansaugrohrsystem befindlichen Luftproben benötigten Zeit zu berechnen. Die Ermittlung bzw. Messung der Strömungsgeschwindigkeit kann dabei entweder direkt oder indirekt, d.h. beispielsweise auf der Grundlage von Geräteparametern, wie etwa der Leistung der Ansaugvorrichtung, dem effektiven Strömungsquerschnitt des Ansaugrohrsystems und der jeweiligen Querschnitte der in dem Ansaugrohrsystem vorgesehenen Ansaugöffnungen, erfolgen. Eine direkte Messung ist mit einer Vielzahl verschiedener, aus dem Stand der Technik bekannten Verfahren zum Messen einer Strömungsgeschwindigkeit möglich. Denkbar hierbei wäre beispielsweise das Verfahren der Hitzdraht- bzw. Heißfilm-Anemometrie zu verwenden. Mit der berechneten Zeit, die für die Ausblasvorrichtung zum vollständigen Ausblasen der sich im Ansaugrohrsystem befindlichen Luftproben benötigt wird, kann in vorteilhafter Weise erreicht werden, dass die Ausblaszeit minimalisiert wird und die Lokalisierung des Brandortes in kürzester Zeit durchgeführt werden kann.

In einer besonders vorteilhaften Realisierung des erfindungsgemäßen Verfahrens ist dabei vorgesehen, dass der Verfahrensschritt des Ausblasens der angesaugten und sich im Ansaugrohrsystem befindlichen Luftproben ferner den Verfahrensschritt des Ermittelns der Strömungsgeschwindigkeit während des Ausblasens aufweist, um die zum vollständigen Ausblasen der sich im Ansaugrohrsystem befindlichen Luftproben benötigten Zeit zu berechnen. Hierbei wird der Tatsache Sorge getragen, dass das Ansaugen und Ausblasen sehr wahrscheinlich mit unterschiedlichen Strömungsgeschwindigkeiten erfolgt, selbst wenn zum Ansaugen und Ausblasen der selbe Lüfter verwendet wird, da der Lüfter in der Regel unterschiedliche Kennlinien für diese beiden Betriebsmodi aufweist. Basierend auf der während des Ausblasens ermittelten Strömungsgeschwindigkeit wird dann die Zeit berechnet, die zum vollständigen Ausblasen der sich im Ansaugrohrsystem befindlichen Luftproben benötigt wird, wobei diese berechnete Zeit ein sehr genauer Wert ist.

Besonders bevorzugt ist ferner vorgesehen, die Strömungsgeschwindigkeit der Luftproben im Ansaugrohrsystem während der erneuten Entnahme der jeweiligen Luftprobe aus den einzelnen Überwachungsräumen zu ermitteln. Jene ermittelte Strömungsgeschwindigkeit dient im Anschluss daran als Grundlage zur Berechnung der während der erneuten Entnahme der jeweiligen Luftprobe aus den einzelnen Überwachungsräumen auftretenden Laufzeit der jeweiligen, die Raumluft des einzelnen Überwachungsraumes repräsentierenden Luftproben. Mit dieser Weiterbildung des Verfahrens ist eine besonders hohe Zuverlässigkeit und Genauigkeit der Lokalisierung des Brandortes erzielbar. Selbstverständlich kann jedoch auch die während der erneuten Entnahme der jeweiligen Luftprobe aus den einzelnen Überwachungsräumen auftretende Laufzeit auf der Basis von beispielsweise der während der kontinuierlichen Entnahme der jeweiligen Luftprobe aus einzelnen Überwachungsräumen ermittelten Strömungsgeschwindigkeit oder auf der Basis von theoretischen Werten berechnet werden.

Die bei dem erfindungsgemäßen Verfahren durchgeführte Luftprobenentnahme erfolgt mittels einer Ansaugvorrichtung, wobei das erneute Ansaugen von Luftproben aus den einzelnen Überwachungsräumen mit einer im Vergleich zur Ansaugleitung der zuvor durchgeführten Luftprobenentnahme reduzierten Ansaugleitung erfolgt. Dadurch wird in besonders bevorzugter Weise erreicht, dass sich die Laufzeiten beim erneuten Ansaugen verlängern und der Unterschied der Laufzeiten der verschiedenen Ansaugöffnungen untereinander größer wird. Hierdurch ist die Zuordnung der gemessenen Laufzeit zu einem Überwachungsraum sicherer. Denkbar wäre beispielsweise eine Toleranz von 0,5 bis 2 Sekunden bei der Laufzeitmessung einzuplanen. Um zu vermeiden, dass sich die Toleranzbereiche der Laufzeiten von zwei benachbarten Ansaugöffnungen überschneiden, wodurch eine Lokalisierung des Brandes nicht mehr möglich ist, wird von daher das erneute Ansaugen bei einer niedrigeren Ansaugleistung betrieben. In vorteilhafter Weise erhöht sich von daher in dieser Ausführungsform die Genauigkeit der Laufzeitmessung. Selbstverständlich ist aber auch denkbar, zusätzlich bzw. stattdessen während des erneuten Ansaugens im Detektor die Sampling- Rate für die Brandkenngröße zu erhöhen, was ebenfalls die Genauigkeit der Laufzeitmessung steigert.

In einer besonders bevorzugten Umsetzung des erfindungsgemäßen Verfahrens ist ferner eine Prozedur zur Autojustierung vorgesehen, welche die folgenden Verfahrensschritte aufweist: eine Brandkenngröße wird an einer Ansaugöffnung des von dem mindestens einem Detektor am weitesten entfernten Überwachungsraumes während der gesamten Zeit der Autojustierungsprozedur künstlich erzeugt; es werden Luftproben aus den einzelnen Überwachungsräumen über das gemeinsame Ansaugrohrsystem angesaugt, bis der mindestens eine Detektor die künstlich erzeugte Brandkenngröße in den angesaugten Luftproben nachweist; die angesaugten und sich im Ansaugrohrsystem befindlichen Luftproben werden mit einer Ausblas- oder Saug-/ Blasvorrichtung ausgeblasen; es werden erneut Luftproben aus den einzelnen Überwachungsräumen über das Ansaugrohrsystem zumindest so lange angesaugt, bis der mindestens eine Detektor erneut eine künstlich erzeugte Brandkenngröße in den Luftproben nachweist; die bis zum erneuten Nachweis der künstlich erzeugten Brandkenngröße anfallende Laufzeit der erneut durchgeführten Luftprobenentnahme wird ausgewertet um eine für das Ansaugrohrsystem maximale Laufzeit zu ermitteln; es werden die für die einzelnen Überwachungsräume auftretenden Laufzeiten der jeweiligen, die Raumluft des einzelnen Überwachungsraumes repräsentierenden Luftprobe basierend auf der zuvor ermittelten, maximalen Laufzeit und der Konfiguration des Ansaugrohrsystems, insbesondere Abstand der Ansaugöffnungen, Durchmesser des Ansaugrohrsystems und Durchmesser der Ansaugöffnungen, berechnet; und die berechneten Laufzeiten der jeweiligen Luftproben werden in einer Tabelle abgelegt. Der Vorteil dieser Ausführungsform, die die Prozedur zur Autojustierung verwendet, liegt insbesondere darin, dass es hiermit nicht mehr erforderlich ist, die Strömungsgeschwindigkeit der Luftprobe im Ansaugrohrsystem zu messen. Von daher ist beabsichtigt, bei der in Betriebnahme der Branderkennungsvorrichtung sie in einem Selbstlernmodus zu versetzen, Rauch an der weitesten entfernten Ansaugöffnung zu erzeugen, und mit den Verfahrensschritten des Ansaugens, des Ausblasens und des erneuten Ansaugens die Laufzeit zu messen. Anhand dieser maximalen Laufzeit und der Rohrkonfiguration können dann die Laufzeiten für alle Ansaugöffnungen berechnet werden. Diese Berechnung kann von der Branderkennungsvorrichtung selbst oder extern, beispielsweise an einem tragbaren Rechner, durchgeführt werden. Anschließend werden die berechneten Laufzeiten in der Branderkennungsvorrichtung in einer Tabelle abgelegt.

Bei einer besonders bevorzugten Weiterentwicklung des erfindungsgemäßen Verfahrens, dass die Autojustierungsprozedur verwendet, ist ferner das Anwenden einer Korrekturfunktion an den in der Tabelle abgelegten, berechneten Laufzeiten zur Aktualisierung der für die einzelnen Überwachungsräume auftretenden Laufzeitwerte vorgesehen. Hierdurch wird Sorge getragen, dass im Laufe der Zeit das Ansaugrohrsystem und/oder die Ansaugöffnungen langsam verschmutzen können, was eine langsame Änderung der Strömungsgeschwindigkeit nach sich ziehen wird. Aus den in der Tabelle abgelegten Laufzeiten können dann mit einem Korrekturfaktor aktuelle Laufzeiten berechnet werden.

Das Auswerten der im erfindungsgemäßen Verfahren bis zum erneuten Nachweis der Brandkenngröße anfallenden Laufzeiten der erneut durchgeführten Luftprobenentnahme erfolgt bevorzugt durch Vergleichen der anfallenden Laufzeit mit jeweiligen, für die einzelnen Überwachungsräume theoretisch berechneten Laufzeiten. Als Parameter, von denen die theoretisch berechneten Laufzeiten abhängen können, kommen die Länge der jeweiligen Abschnitte des Ansaugrohrsystems zwischen dem Detektor und Ansaugöffnungen der jeweiligen Überwachungsräume, der effektive Strömungsquerschnitt des Ansaugrohrsystems und/oder der jeweiligen Abschnitte des Ansaugrohrsystems zwischen dem Detektor und den Ansaugöffnungen der jeweiligen Überwachungsräume, und die Strömungsgeschwindigkeit der Luftprobe in dem Ansaugrohrsystem und/oder in den jeweiligen Abschnitten des Ansaugrohrsystems zwischen dem Detektor und den Ansaugöffnungen der jeweiligen Überwachungsräume in Frage. Selbstverständlich sind jedoch auch andere Parameter, von denen die theoretisch berechnete Laufzeit abhängen kann, denkbar.

Als vorteilhafte Weiterbildung zur erfindungsgemäßen Vorrichtung ist vorgesehen, dass die Vorrichtung ferner eine Steuerung aufweist, um eine zeitlich koordinierte Steuerung der Ansaugvorrichtung und der Ausblasvorrichtung in Übereinstimmung mit einem von dem mindestens einen Detektor ausgegebenen Signal zu ermöglichen, wenn der Detektor in den Luftproben zumindest eine Brandkenngröße nachweist.

Jene Steuerung ist in bevorzugter Weise dabei so ausgelegt, dass sie die Ansaugvorrichtung zunächst ansteuert, um eine kontinuierliche Entnahme von jeweils einer die Raumluft der einzelnen Überwachungsräume repräsentierenden Luftprobe aus den einzelnen Überwachungsräumen über das gemeinsame Ansaugrohrsystem zu bewirken. Wenn der Detektor dann in den angesaugten Luftproben zumindest eine Brandkenngröße nachweist und somit ein entsprechendes Signal an die Steuerung sendet, gibt die Steuerung in Erwiderung hierauf ein entsprechendes Signal an die Ansaugvorrichtung ab, um diese anzuhalten, wobei gleichzeitig bzw. im unmittelbaren Anschluss daran ein weiteres Signal von der Steuerung an die Ausblasvorrichtung geht, welches die Ausblasvorrichtung einschaltet, um die angesaugte und sich im Ansaugrohrsystem befindlichen Luftproben auszublasen. Erfindungsgemäß ist dabei vorgesehen, dass die Steuerung nach einer festgelegten Zeit ein weiteres Signal an die Ausblasvorrichtung abgibt, um diese anzuhalten, wobei gleichzeitig bzw. im unmittelbaren Anschluss daran ein Signal von der Steuerung an die Ansaugvorrichtung geht, um eine erneute kontinuierliche Entnahme von jeweils einer die Raumluft der einzelnen Überwachungsräume repräsentierenden Luftprobe aus den einzelnen Überwachungsräumen über das Ansaugrohrsystem zu bewirken. Die festgelegte Zeit, während welcher die Ausblasvorrichtung aktiv ist, ist entweder eine theoretisch auf der Basis von Geräteparametern ermittelte und in einem Speicher abgelegte Zeit, oder eine mittels eines gemessenen Strömungsgeschwindigkeitswertes der Luftprobe im Ansaugrohrsystem während der kontinuierlichen Entnahme der jeweiligen Luftproben aus den einzelnen Überwachungsräumen ermittelte Zeit.

In einer besonders bevorzugten Ausführungsform der erfindungsgemäßen Vorrichtung ist ferner eine Speichervorrichtung vorgesehen, in welcher Laufzeitwerte gespeichert werden. Diese in dem Speicher abgelegten Werte können beispielsweise während einer Autojustierungsprozedur anhand einer maximalen Laufzeit und der Rohrkonfiguration ermittelten Laufzeiten sein.

Besonders bevorzugt weist die erfindungsgemäße Vorrichtung zumindest einen Raucherzeuger auf, der bei einer Ansaugöffnung angeordnet ist und der zum Einstellen und Überprüfen der Branderkennungsvorrichtung eine Brandkenngröße auf künstliche Weise erzeugen kann. Bei der Inbetriebnahme der Branderkennungsvorrichtung ist es somit möglich, diese in einen Selbstlernmodus zu versetzen, in welchem Rauch an der weitesten entfernten Ansaugöffnung mittels des Raucherzeugers erzeugt wird und die Laufzeit des künstlich erzeugten Rauches bzw. der künstlich erzeugten Brandkenngröße gemessen wird. Damit ist es möglich, eine maximale Laufzeit zu messen, anhand dieser und in Kenntnis der Rohrkonfiguration die Laufzeiten für alle Ansaugöffnungen berechnet werden. Selbstverständlich ist es hierbei aber auch denkbar, dass der Branderzeuger an einer anderen Ansaugöffnung angeordnet ist bzw. das mehrere Raucherzeuger an verschiedenen Ansaugöffnungen vorliegen.

In einer möglichen Realisierung weist die erfindungsgemäße Vorrichtung ferner einen Sensor zum Messen der Strömungsgeschwindigkeit der Luftproben in dem Ansaugrohrsystem auf. Hierdurch ist es in vorteilhafter Weise möglich, die Strömungsgeschwindigkeit der angesaugten Luftproben im Ansaugrohrsystem zu ermitteln, um anhand dieser eine für die Ausblasvorrichtung zum vollständigen Ausblasen der sich im Ansaugrohrsystem befindlichen Luftproben benötigten Zeit zu berechnen. Die mit Hilfe des Sensors ermittelte Strömungsgeschwindigkeit kann ferner zum Berechnen der während der erneuten Entnahme der jeweiligen Luftproben aus den einzelnen Überwachungsräumen auftretenden Laufzeit der jeweiligen, die Raumluft der einzelnen Überwachungsräume repräsentierenden Luftproben dienen. Beispiele für einen Sensor zum Messen der Strömungsgeschwindigkeit sind aus dem Stand der Technik bekannt und schließen Sensoren auf dem Prinzip der Heißfilm- bzw. Hitzdraht-Anemometrie ein. Denkbar wäre es ferner, anstelle eines Sensors zum Messen der Strömungsgeschwindigkeit, auch die Strömungsgeschwindigkeit anhand von theoretischen Geräteparametern zu ermitteln. Denkbar wäre hierbei aber auch, den Sensor zum Messen der Strömungsgeschwindigkeit nur bei der Inbetriebnahme für die Dauer eines Selbstlernmodus der Vorrichtung einzuschalten.

Besonders bevorzugt ist ein Prozessor vorgesehen, zum Auswerten eines von dem mindestens einen Detektor ausgegebenen Signals, wenn der Detektor eine Brandkenngröße in der Luftprobe nachweist, und eines von der Steuerung an die Ansaugvorrichtung und/oder Ausblasvorrichtung ausgegebenen Steuersignals. Der Prozessor ist dabei in vorteilhafter Weise derart ausgebildet, dass er anhand der Signale die Laufzeit der bei der erneuten kontinuierlichen Entnahme von jeweils einer die Raumluft der einzelnen Überwachungsräume repräsentierenden Luftprobe aus den einzelnen Überwachungsräumen über das Ansaugrohrsystem ermittelt, um somit den Brandort oder den Ort der Entstehung des Brandes zu lokalisieren. Das Auswerten der anfallenden Laufzeit erfolgt dabei in dem Prozessor durch Vergleich der anfallenden Laufzeit mit jeweiligen, für die einzelnen Überwachungsräume theoretisch berechneten Laufzeiten. Jene theoretisch berechneten Laufzeiten können beispielsweise von der Länge der jeweiligen Abschnitte des Ansaugrohrsystems zwischen dem Detektor und den jeweiligen Überwachungsräumen, den effektiven Strömungsquerschnitten des Ansaugrohrsystems und/oder der jeweiligen Abschnitte des Ansaugrohrsystems zwischen dem Detektor und den jeweiligen Überwachungsräumen, und der Strömungsgeschwindigkeit der Luftprobe in dem Ansaugrohrsystem und/oder in den jeweiligen Abschnitten des Ansaugrohrsystems zwischen dem Detektor und den Ansaugöffnungen der jeweiligen Überwachungsräume abhängen. Über die Auswertung der Laufzeiten ist die Lokalisierung des Brandortes möglich.

Als vorteilhafte Weiterbildung zur erfindungsgemäßen Vorrichtung ist vorgesehen, dass die Querschnitte und/oder die Querschnittsformgebungen der einzelnen Ansaugöffnungen abhängig von den jeweiligen Überwachungsräumen ausgeführt sind.

Denkbar wäre hierbei, bei Überwachungsräumen, die weiter von der Ansaug- bzw. Ausblasvorrichtung angeordnet sind, Ansaugöffnungen mit größeren Querschnitten einzusetzen als bei Überwachungsräumen, die nahe an der Ansaug- bzw. Ausblasvorrichtung liegen. Hierbei wird die jeweilige Entfernung der Überwachungsräume von der Ansaug- bzw. Ausblasvorrichtung über die Stecke definiert, die eine Luftprobe aus den jeweiligen Überwachungsräumen von den jeweiligen Ansaugöffnungen über das Ansaugrohrsystem zu der Ansaugvorrichtung zurücklegen muss. Die jeweiligen Querschnittsformgebungen bzw. Querschnittsgrößen der einzelnen Ansaugöffnungen sind dabei so konzipiert, dass sie dem im Ansaugrohrsystem auftretenden Druckabfall Rechnung tragen. Durch die erfindungsgemäße Weiterbildung der Ansaugöffnungen kann somit erreicht werden, dass die erfindungsgemäße Vorrichtung für jeden der Vielzahl der Überwachungsräume gleichermaßen sensitiv hinsichtlich der Branderkennung und der Brandlokalisierung ist. In einer möglichen Realisierung könnten die einzelnen Ansaugöffnungen im Ansaugrohrsystem nach der Installation des Rohrsystems im Gebäude den entsprechenden Bedingungen angepasst werden. Denkbar wäre beispielsweise, zunächst sämtliche Ansaugöffnungen gleichgroß bzw. mit gleicher Querschnittsformgebung auszuführen, wobei nach der Installation die jeweiligen Ansaugöffnungen durch Anbringen einer entsprechenden Blendenöffnung auf die Ansaugöffnungen eingestellt werden. Hierbei kommen beispielsweise Lochfolien oder Lochclipps zum Einsatz, wobei die Lochgröße der Folie bzw. des Clipps den räumlichen Bedingungen angepasst ist. Selbstverständlich sind hier aber auch andere Ausführungsformen denkbar. Möglich wäre auch, das Ansaugrohrsystem als solches derart auszulegen, dass die Querschnittsformgebung des Ansaugrohrsystems entsprechend den Installationsbedingungen variiert.

In einer besonders vorteilhaften Realisierung ist vorgesehen, dass die Ansaugvorrichtung und die Ausblasvorrichtung gemeinsam als ein Gebläse ausgebildet sind. Jenes Gebläse ist dabei so ausgelegt, dass es seine Luftförderrichtung in Erwiderung auf das Steuersignal von der Steuerung ändert. Hierdurch kann erreicht werden, dass die Anzahl der die erfindungsgemäßen Vorrichtung begründeten Komponenten weiter reduziert werden kann, was in vorteilhafter Weise wiederum die Kosten der Herstellung der erfindungsgemäßen Vorrichtung herabsetzt.

Um die Anzahl der Komponenten, die die erfindungsgemäße Branderkennungs- und Brandlokalisierungsvorrichtung ausbilden, weiter zu reduzieren, ist die Ansaugvorrichtung und die Ausblasvorrichtung in vorteilhafter Weise gemeinsam als ein Gebläse ausgebildet, wobei das Gebläse ein Lüfter mit Drehrichtungsumkehr ist.

In einer weiteren Realisierung der erfindungsgemäßen Vorrichtung, bei der die Ansaugvorrichtung und die Ausblasvorrichtung gemeinsam als ein Gebläse ausgebildet sind, ist vorgesehen, dass das Gebläse ein Lüfter mit entsprechenden Lüftungsklappen zur Änderung der Luftförderrichtung ist. Selbstverständlich sind hier aber auch andere Ausführungsformen denkbar.

Die erfindungsgemäße Vorrichtung weist, wie bereits erläutert, Anzeigeelemente auf, die den Brandort in einem der Überwachungsräume identifizieren. Diese Anzeigeelemente können in der Nähe der Zugänge zu den Räumen oder an bzw. in der Nähe der Branderkennungsvorrichtung sein. Die Kommunikationsmittel bzw. eine Eingabebausteine für den Anschluss an einen Kommunikationsbus mit einer Brandmeiderzentrale dienen dazu, die Information über den Brandort an die Zentrale weiterzuleiten, um sie beispielsweise im Klartext auf dem Bedienfeld darzustellen (z.B. durch "Feuer in Raum X"). Zusätzlich zu oder anstelle der Anzeigeelemente kann die erfindungsgemäße Vorrichtung ferner eine Kommunikationseinrichtung aufweisen, über welche Information hinsichtlich der Entstehung und/oder das Vorhandensein eines Brandes in einem oder mehreren der Überwachungsräume und hinsichtlich der eindeutigen Lokalisierung des Brandes in dem einen oder den mehreren Überwachungsräumen zu einer von der Vorrichtung entfernten Stelle, wie etwa zu einer Brandmeldezentrale oder einer Leitstelle für Einsatzkräfte, übertragen wird. Die Kommunikationseinrichtung stellt dabei in bevorzugter Weise je nach Anwendung entweder eine drahtgestützte und/oder eine funkgestützte Kömmunikationsmöglichkeit bereit, die bei Bedarf ein entsprechendes Signal an zumindest einen zugehörigen und entfernt von der erfindungsgemäßen Vorrichtung angeordneten Empfänger abgibt. Jene Kommunikationseinrichtung kann selbstverständlich aber auch selbst von außerhalb angesteuert werden, um etwa einen Betriebszustand der Vorrichtung zu ändern oder zu überprüfen. Als mögliches Kommunikationsmedium kommt ferner die IR-Technologie in Frage.

Im Folgenden wird ein bevorzugtes Ausführungsbeispiel der Erfindung anhand von Zeichnungen näher erläutert.

Es zeigen:
- Fig. 1: eine schematische Darstellung einer Ausführungsform der erfindungsgemäßen Vorrichtung zum Erkennen eines Brandes und zum Lokalisieren des Brandes in einem Überwachungsraum aus einer Vielzahl von Überwachungsräumen; und
- Fig. 2a, b: jeweils graphische Darstellung von Signalverläufen.

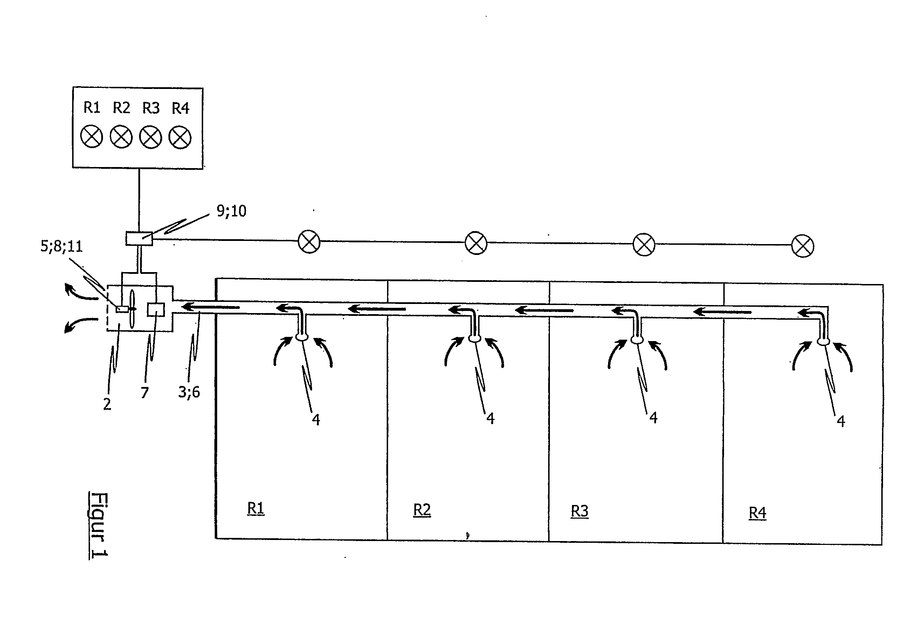

Figur 1 zeigt eine schematische Darstellung einer bevorzugten Ausführungsform der erfindungsgemäßen Vorrichtung zum Erkennen eines Brandes und zum Lokalisieren des Brandes in einem Überwachungsraum (R₁, R₂,.., Rₙ) aus einer Vielzahl von Überwachungsräumen (R₁, R₂,.., Rₙ). Bei der erfindungsgemäßen Vorrichtung gemäß Figur 1 handelt es sich um eine zentral angeordnete, aspirative Branderkennungsvorrichtung, die in der Lage ist, den Brandort genau zu lokalisieren. In der dargestellten Ausführungsform wird die Vorrichtung zur Überwachung von vier separaten Überwachungsräumen (R₁, R₂, R₃, R₄) eingesetzt. Hierbei ist vorgesehen, dass aus den jeweiligen Überwachungsräumen (R₁,..., R₄) über ein gemeinsames Ansaugrohrsystem (3) kontinuierlich jeweils eine Luftprobe (6), die die Raumluft der jeweiligen Überwachungsräume (R₁,...,R₄) repräsentiert, entnommen wird. Hierzu ist an dem einen Ende des Ansaugrohrsystems (3) eine Ansaugvorrichtung (5) in der Gestalt eines Lüfters vorgesehen. Die über das gemeinsame Ansaugrohrsystem (3) durch die Ansaugvorrichtung (5) angesaugten Luftproben (6) werden einem Detektor oder mehreren Detektoren (7) zum Nachweisen einer oder mehreren Brandkenngrößen zugeführt. Denkbar hierbei wäre, die Ansaugvorrichtung (5) zusammen mit dem Detektor (7) in einem gemeinsamen Gehäuse (2) anzuordnen.

Der Detektor (7) dient dazu, die über das Ansaugrohrsystem (3) angesaugten Luftproben (6), die jeweils die Raumluft der zu überwachenden Überwachungsräume (R₁,..., R₄) repräsentieren, hinsichtlich einer Brandkenngröße zu analysieren. Hierbei können als Detektor (7) sämtliche aus dem Stand der Technik bekannten Vorrichtungen eingesetzt werden. In dem Fall, wenn in einem der Überwachungsräume (R₁,..., R₄) ein Brand ausbricht bzw. Brandkenngrößen in der Raumluft des Überwachungsraumes (R₁,..., R₄) enthalten sind und der Detektor (7) in den angesaugten Luftproben (6) die Brandkenngröße nachweist, gibt dieser ein entsprechendes Signal an eine Steuerung (9) ab.

Die Steuerung (9) gibt in Erwiderung auf dieses Signal ein entsprechendes Steuersignal an die Ansaugvorrichtung (5) aus, um diese auszuschalten. Gleichzeitig bzw. unmittelbar danach wird ein weiteres Signal von der Steuerung (9) an eine Ausblasvorrichtung abgegeben, um diese zu aktivieren. Jene Ausblasvorrichtung (8) ist in vorteilhafter Weise so angeordnet, dass sie im Betrieb die bereits angesaugte und sich noch im Ansaugrohrsystem (3) befindlichen Luftproben (6) ausbläst. In einer besonders vorteilhaften Weise sind in der dargestellten Ausführungsform die Ansaugvorrichtung (5) und die Ausblasvorrichtung (8) gemeinsam als ein Gebläse (11) ausgebildet, welches seine Luftförderrichtung in Erwiderung auf die von der Steuerung (9) abgegebenen Signale ändert. Als Beispiel könnte das Gebläse einen Lüfter mit Drehrichtungsumkehr aufweisen, denkbar wäre jedoch auch ein Gebläse (11), das über einen Lüfter mit Lüftungsklappen verfügt. Beim Ausblasen des Ansaugrohrsystems wird von der Ausblasvorrichtung (8) in Richtung der einzelnen Ansaugöffnungen (4) der jeweiligen Überwachungsräume (R₁,..., R₄) Frischluft, d.h. Luft von außerhalb, eingebracht. Jene Frischluft verdrängt dabei die sich noch im Ansaugrohrsystem (3) befindlichen Luftproben (6), welche beispielsweise so über die jeweilige Ansaugöffnungen (4) zurück in die Überwachungsräume (R₁,..., R₄) ausgeblasen wird.

Die Steuerung (9) ist erfindungsgemäß so konzipiert, dass sie, nachdem sämtliche Luftproben (6) aus dem Ansaugrohrsystem (3) ausgeblasen wurden, ein weiteres Signal an die Ausblasvorrichtung (8) abgibt, um sie auszuschalten. Gleichzeitig bzw. unmittelbar danach wird die Ansaugvorrichtung (5) über die Steuerung (9) erneut aktiviert. Dadurch wird erneut aus den einzelnen Überwachungsräumen (R₁,...,R₄) über das Ansaugrohrsystem (3) die Raumluft der einzelnen Überwachungsräume (R₁,...,R₄) repräsentierenden Luftproben (6) entnommen und dem Detektor (7) zugeführt. Jener Detektor (7) weist eine bestimmte Zeit nach dem erneuten Starten der Ansaugvorrichtung (5) das Auftreten von Brandkenngrößen in den angesaugten Luftproben (6) nach. Jene Zeit, die zwischen dem erneuten Starten der Ansaugvorrichtung (5) und dem erstmaligen Detektieren der Brandkenngrößen in der erneut angesaugten Luftprobe (6) verstrichen ist, definiert die sogenannte Laufzeit, die als Basis zur Lokalisierung des Brandortes dient.

Zur Auswertung der derart ermittelten Laufzeit ist ein Prozessor (10) vorgesehen, der die ermittelte Laufzeit mit theoretisch berechneten Laufzeiten vergleicht. Die theoretisch berechneten Laufzeiten stehen in direktem Zusammenhang mit der Entfernung des Detektors (7) zu den Ansaugöffnungen (4) der einzelnen Überwachungsräume (R₁,..., R₄), da sie von zumindest einem der folgenden Parameter abhängen: Länge des Ansaugrohrsystems (3) zwischen dem Detektor (7) und den Ansaugöffnungen (4) der jeweiligen Überwachungsräume (R₁,...,R₄); effektiver Strömungsquerschnitt des Ansaugrohrsystems (3) zwischen dem Detektor (7) und den Ansaugöffnungen (4) der jeweiligen Überwachungsräume (R₁,..., R₄); und Strömungsgeschwindigkeit der Luftprobe (6) in dem Ansaugrohrsystem (3). Somit ist es möglich, mit Kenntnis von zumindest der Länge der jeweiligen Abschnitte des Ansaugrohrsystems (3) zwischen dem Detektor (7) und den Ansaugöffnungen (4) der jeweiligen Überwachungsräume (R₁,..., R₄) und der Strömungsgeschwindigkeit der Luftproben (6) in dem Ansaugrohrsystem (3) anhand der gemessenen Laufzeit den Brandort zu lokalisieren.

Die bevorzugte Ausführungsform der vorliegenden Erfindung weist ferner einen Sensor (12) zum Messen der Strömungsgeschwindigkeit der Luftproben (6) in dem Ansaugrohrsystem (3) auf. Die gemessenen Strömungsgeschwindigkeiten werden von dem Prozessor (10) zur Auswertung der gemessenen Laufzeiten verwendet. Es ist jedoch auch möglich, auf einen Sensor (12) zur Messung der Strömungsgeschwindigkeit zu verzichten, wobei die Strömungsgeschwindigkeit anhand von Geräteparametern, wie etwa effektiver Strömungsquerschnitt des Ansaugrohrsystems (3), Ansaugleistung der Ansaugvorrichtung (5), Querschnittsformgebung und Querschnittsöffnung der Ansaugöffnungen (4), ermittelt wird.

Es ist auch möglich, dass die Branderkennungsvorrichtung in einem Selbstlernmodus eine Laufzeit ermittelt und daraus alle jeweiligen Laufzeiten berechnet und in einer Tabelle in einem Speicher ablegt.

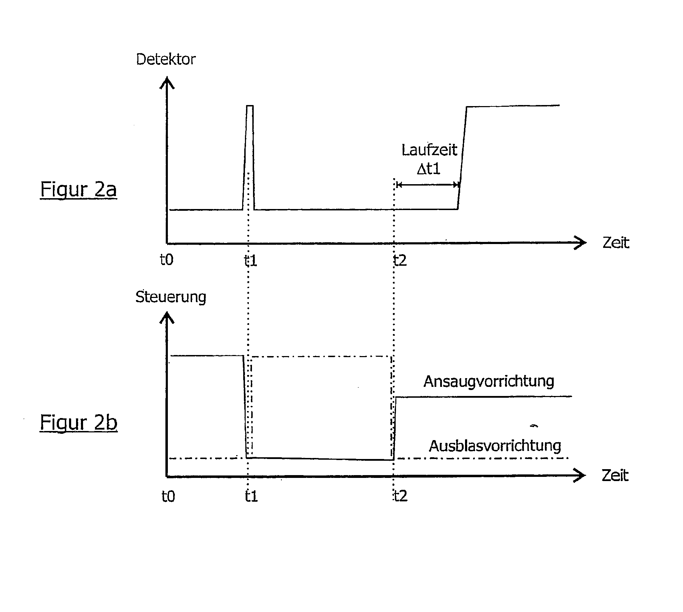

Die Figuren 2a und 2b zeigen jeweils eine graphische Darstellung, die schematisch das von dem Detektor (7) ausgegebene Signal bzw. das von der Steuerung (9) ausgegebene Signal zur Ansteuerung der Ansaugvorrichtung (5) und der Ausblasvorrichtung (8) zeigen. Die Abszissenachse stellt in diesem Fall die Zeit dar, während die Ordinatenachse das Signal des Detektors (7) bzw. das Steuersignal der Steuerung (10) repräsentiert. In der Zeitspanne t₀ bis t₁ wird dabei die Ansaugvorrichtung (5) von der Steuerung (10) so gesteuert, dass sie kontinuierlich aktiv ist, d.h. Luftproben (6) aus den Überwachungsräumen (R₁,..., R₄) entnimmt. Dieser Vorgang ist in der Figur 2b mittels einer punktierten Linie dargestellt. Beim Zeitpunkt t₁ detektiert der Detektor (7) das Auftreten einer Brandkenngröße in den angesaugten Luftproben (6). In Erwiderung auf das von dem Detektor (7) zum Zeitpunkt t₁ ausgegebene Signal wird die Ansaugvorrichtung (5) ausgeschaltet und gleichzeitig die Ausblasvorrichtung (8) aktiviert. Die Ausblaszeit entspricht der Zeitperiode von t₁ bis t₂, die eine von der Leistung der Ausblasvorrichtung (8) und von spezifischen Parametern des Ansaugrohrsystems (3) abhängige Zeit ist.

Nachdem zum Zeitpunkt t₂ sämtliche sich im Ansaugrohrsystem (3) befindlichen Luftproben (6) ausgeblasen wurden, deaktiviert die Steuerung (9) die Ausblasvorrichtung (8) und aktiviert gleichzeitig erneut die Ansaugvorrichtung (5). Demgemäss werden dem Detektor (7) nun erneut Luftproben (6) zugeführt. Ausschlaggebend für die Lokalisierung des Brandortes ist nun die Laufzeit Δ t₁ bis Δ t₄. Die Laufzeit (Δ ti,... Δ t₄) entspricht der Zeitperiode von dem Zeitpunkt t₂, an welchem die Ansaugvorrichtung (5) erneut aktiviert wurde, bis zu dem Zeitpunkt t₃ bis t₆, wenn der Detektor (7) erneut eine Brandkenngröße in den angesaugten Luftproben (6) nachweist. Jene Laufzeiten (Δ t₁... Δ t₄) sind für die einzelnen Überwachungsräume (R₁,..., R₄) spezifisch und dienen bei der anschließenden Auswertung der Lokalisierung des Brandortes.

## Patentansprüche

1. Verfahren zum Erkennen und Lokalisieren eines Brandes und/oder der Entstehung eines Brandes in einem oder mehreren Überwachungsräumen (R₁,R₂,R₃,..,Rₙ), mit folgenden Verfahrensschritten:
a) Entnahme von jeweils einer die Raumluft der einzelnen Überwachungsräume (R₁,...,Rₙ) repräsentierenden Luftprobe (6) aus den einzelnen Überwachungräumen (R₁,...,Rₙ) über ein gemeinsames Ansaugrohrsystem (3);
b) Nachweis von zumindest einer Brandkenngröße in den über das Ansaugrohrsystem (3) angesaugten Luftproben (6) mit mindestens einem Detektor (7) zum Nachweisen von Brandkenngrößen;
**gekennzeichnet durch**
die folgenden Verfahrensschritte:
c) Ausblasen der angesaugten und sich im Ansaugrohrsystem (3) befindlichen Luftproben (6) mit einer Ausblasvorrichtung oder Saug-/Blasvorrichtung (8), wenn der mindestens eine Detektor (7) zumindest eine Brandkenngröße nachgewiesen hat;
d) Erneutes Ansaugen von Luftproben (6) aus den einzelnen Überwachungsräumen (R₁,..., Rₙ) über das Ansaugrohrsystem (3), zumindest so lange, bis der mindestens eine Detektor (7) erneut eine Brandkenngröße in einer Luftprobe (6) nachweist;
e) Auswerten der bis zum erneuten Nachweis der Brandkenngröße anfallenden Laufzeit der im Verfahrensschritt d) durchgeführten erneuten Luftprobenentnahme, um den Brandort oder den Ort der Entstehung des Brandes in einem der Vielzahl der Überwachungsräume (R₁,..., Rₙ) zu lokalisieren; und
f) Abgeben eines Signals, das auf die Entstehung und/oder das Vorhandensein eines Brandes in einem oder mehreren der Überwachungsräume (R₁,...,Rₙ) hinweist, wobei das Signal ferner Information zur eindeutigen Lokalisierung des Brandes in dem einen oder den mehreren Überwachungsräumen (R₁,...,Rₙ) enthält.

2. Verfahren gemäß Anspruch 1, welches ferner die folgenden Verfahrenschritte nach Verfahrensschritt a) aufweist:
a1) Ermitteln der Strömungsgeschwindigkeit der Luftprobe (6) im Ansaugrohrsystem (3) während der kontinuierlichen Entnahme der jeweiligen Luftprobe (6) aus den einzelnen Überwachungsräumen (R₁,..., Rₙ); und
a2) Berechnen einer zum vollständigen Ausblasen der sich im Ansaugrohrsystem (3) befindlichen Luftproben (6) benötigten Zeit.

3. Verfahren gemäß Anspruch 1 oder 2,
**dadurch gekennzeichnet, dass**
der Verfahrensschritt c) den Verfahrensschritt des Ermittelns der Strömungsgeschwindigkeit während des Ausblasens aufweist, um die zum vollständigen Ausblasen der sich im Ansaugrohrsystem (3) befindlichen Luftproben (6) benötigten Zeit zu berechnen.

4. Verfahren gemäß einem der vorhergehenden Ansprüche, welches ferner die folgenden Verfahrensschritte nach Verfahrensschritt d) aufweist:
d1) Ermitteln der Strömungsgeschwindigkeit der Luftproben (6) im Ansaugrohrsystem (3) während der erneuten Entnahme der jeweiligen Luftprobe (6) aus den einzelnen Überwachungsräumen (R₁,..., Rₙ); und
d2) Berechnen der während der erneuten Entnahme der jeweiligen Luftprobe (6) aus den einzelnen Überwachungsräumen (R₁,..., Rₙ) auftretenden Laufzeit der jeweiligen, die Raumluft des einzelnen Überwachungsraumes (R₁,..., Rₙ) repräsentierenden Luftprobe (6).

5. Verfahren gemäß einem der vorhergehenden Ansprüche,
**dadurch gekennzeichnet, dass**
die in den Verfahrensschritten a) und d) durchgeführte Luftprobenentnahme mittels einer Ansaugvorrichtung (5) erfolgt, wobei das im Verfahrensschritt d) durchgeführte erneute Ansaugen mit einer im Vergleich zur Ansaugleistung der im Verfahrensschritt a) durchgeführten Luftprobenentnahme reduzierten Ansaugleistung erfolgt.

6. Verfahren gemäß einem der vorhergehenden Ansprüche, welches ferner eine Prozedur zur Autojustierung durchführt, die folgende Verfahrensschritte aufweist:
i) künstliches Erzeugen einer Brandkenngröße an einer Ansaugöffnung (4) des von dem mindestens einen Detektor (7) am weitesten entfernten Überwachungsraumes (Rₙ) während der gesamten Zeit der Autojustierungsprozedur;
ii) Ansaugen von Luftproben (6) aus den einzelnen Überwachungsräumen (R₁,...,Rₙ) über das gemeinsame Ansaugrohrsystem (3) bis der mindestens eine Detektor (7) die künstlich erzeugte Brandkenngröße in den angesaugten Luftproben (6) nachweist;
iii) Ausblasen der angesaugten und sich im Ansaugrohrsystem (3) befindlichen Luftproben (6) mit einer Ausblas- oder Saug-/ Blasvorrichtung (8);
iv) erneutes Ansaugen von Luftproben (6) aus den einzelnen Überwachungsräumen (R₁...,Rₙ) über das Ansaugrohrsystem (3), zumindest so lange, bis der Detektor (7) erneut eine künstlich erzeugte Brandkenngröße in den Luftproben (6) nachweist;
v) Auswerten der bis zum erneuten Nachweis der künstlich erzeugten Brandkenngröße anfallenden Laufzeit der im Verfahrensschritt iv) durchgeführten, erneuten Luftprobenentnahme, um eine für das Ansaugrohrsystem maximale Laufzeit zu ermitteln;
vi) Berechnen der für die einzelnen Überwachungsräume (R₁,...,Rₙ) auftretenden Laufzeiten der jeweiligen, die Raumluft des einzelnen Überwachungsraumes (R₁,...,Rₙ) repräsentierenden Luftprobe (6) basierend auf der im Verfahrensschritt v) ermittelten maximalen Laufzeit und der Konfiguration des Ansaugrohrsystems (3), insbesondere Abstand der Ansaugöffnungen (4), Durchmesser des Ansaugrohrsystems und Durchmesser der Ansaugöffnungen (4); und
vii) Ablegen der berechneten Laufzeiten der jeweiligen Luftproben (6) in einer Tabelle.

7. Verfahren gemäß Anspruch 6, wobei die Autojustierungsprozedur nach dem Verfahrensschritt vii) ferner den folgenden Verfahrensschritt aufweist:
viii) Anwenden einer Korrekturfunktion an den in der Tabelle abgelegten, berechneten Laufzeiten zur Aktualisierung der für die einzelnen Überwachungsräume (R₁,...,Rₙ) auftretenden Laufzeitwerte.

8. Verfahren gemäß Anspruch 6 oder 7, wobei das Auswerten der im Brandfall anfallenden Laufzeit durch Vergleich der anfallenden Laufzeit mit den jeweiligen, in der Autojustierungsprozedur in der Tabelle abgelegten, berechneten Laufzeiten erfolgt.

9. Verfahren gemäß einem der vorhergehenden Ansprüche, wobei das Auswerten der anfallenden Laufzeit durch Vergleich der anfallenden Laufzeit mit jeweiligen, für die einzelnen Überwachungsräume (R₁,..., Rₙ) theoretisch berechneten Laufzeiten erfolgt, die von zumindest einem der folgenden Parameter abhängen: Länge der jeweiligen Abschnitte des Ansaugrohrsystems (3) zwischen dem mindestens einen Detektor (7) und in dem Ansaugrohrsystem (3) vorgesehenen Ansaugöffnungen (4) der jeweiligen Überwachungsräume (R₁,..., Rₙ); effektiver Strömungsquerschnitt des Ansaugrohrsystems (3) und/oder der jeweiligen Abschnitte des Ansaugrohrsystems (3) zwischen dem mindestens einen Detektor (7) und den jeweiligen Überwachungsräumen (R₁,..., Rₙ); und Strömungsgeschwindigkeit der Luftprobe (6) in dem Ansaugrohrsystem (3) und/oder in den jeweiligen Abschnitten des Ansaugrohrsystems (3) zwischen dem mindestens einen Detektor (7) und den Ansaugöffnungen (4) der jeweiligen Überwachungsräume (R₁,..., Rₙ).

10. Branderkennungsvorrichtung zum Erkennen und Lokalisieren eines Brandes und/oder der Entstehung eines Brandes in einem oder mehreren Überwachungsräumen (R₁,...,Rₙ), mit einem die Überwachungsräume (R₁,...,Rₙ) verbindenden Ansaugrohrsystem (3), welches mit jedem einzelnen Überwachungsraum (R₁,..., Rₙ) über jeweils zumindest eine Ansaugöffnung (4) kommuniziert, einer Ansaugvorrichtung (5), um über das Ansaugrohrsystem (3) und die Ansaugöffnungen (4) aus den einzelnen Überwachungsräumen (R₁,..., Rₙ) jeweils die Raumluft der einzelnen Überwachungsräume (R₁,...,Rₙ) repräsentierende Luftproben (6) zu entnehmen, und mit mindestens einem Detektor (7) zum Nachweisen von zumindest einer Brandkenngröße in den über das Ansaugrohrsystem (3) angesaugten Luftproben (6),
**gekennzeichnet durch**
- eine Ausblasvorrichtung (8) zum Ausblasen der in dem Ansaugrohrsystem (3) angesaugten Luftproben (6), wenn der mindestens eine Detektor (7) in den angesaugten Luftproben (6) zumindest eine Brandkenngröße nachweist,
- Mittel (9, 10) zum Steuern der Ansaugvorrichtung (5) und der Ausblasvorrichtung (8), derart , dass jeweils eine Luftprobe (6) aus den einzelnen Überwachungsräumen (R₁,..., Rₙ) über das Ansaugrohrsystem (3) erneut entnommen wird, nachdem sämtliche Luftproben (6) aus dem Ansaugrohrsystem (3) ausgeblasen wurden;
- Mittel zum Messen der Laufzeit bis der mindestens eine Detektor (7) erneut eine Brandkenngröße in den Luftproben (6) nachweist;
- Mittel(10) zum Auswerten der gemessenen Laufzeit, um den Brandort zu lokalisieren; und **durch**
- wenigstens ein Anzeigeelement, das den Brandort in einem der Überwachungsräume (R₁,...,Rₙ) identifizieren und/oder **durch** eine Kommunikationseinrichtung, über welche Information hinsichtlich der Entstehung und/oder das Vorhandensein eines Brandes in einem oder mehreren der Überwachungsräume und hinsichtlich der eindeutigen Lokalisierung des Brandes in dem einen oder den mehreren Überwachungsräumen zu einer von der Vorrichtung entfernten Stelle übertragen wird.

11. Vorrichtung gemäß Anspruch 10,
**dadurch gekennzeichnet, dass**
die Mittel zum Steuern der Ansaugvorrichtung (5) und der Ausblasvorrichtung (8) eine Steuerung (9) zur zeitlich koordinierten Steuerung der Ansaugvorrichtung (5) und der Ausblasvorrichtung (8) in Übereinstimmung mit einem von dem Detektor (7) ausgegebenen Signal enthalten, wenn der mindestens eine Detektor (7) in den Luftproben (6) zumindest eine Brandkenngröße nachweist.

12. Vorrichtung gemäß Anspruch 10 oder 11,
**gekennzeichnet durch**
eine Speichervorrichtung, zum Speichern von Laufzeitwerten.

13. Vorrichtung gemäß einem der Ansprüche 10 bis 12,
**gekennzeichnet durch**
zumindest einen Raucherzeuger, der bei einer Ansaugöffnung (4) angeordnet ist und zum Einstellen und Überprüfen der Branderkennungsvorrichtung eine Brandkenngröße auf künstliche Weise erzeugt.

14. Vorrichtung gemäß einem der Ansprüche 10 bis 13,
**gekennzeichnet durch**
zumindest einen Sensor (12) zum Messen der Strömungsgeschwindigkeit der Luftproben (6) in dem Ansaugrohrsystem.

15. Vorrichtung gemäß einem der Ansprüche 10 bis 14,
**gekennzeichnet durch**
einen Prozessor (10) zum Auswerten eines von dem Detektor (7) ausgegebenen Signals, wenn der mindestens eine Detektor (7) eine Brandkenngröße in der Luftprobe (6) nachweist, und eines von der Steuerung (9) an die Ansaugvorrichtung (5) und/oder Ausblasvorrichtung (8) ausgegebenen Steuersignals.

16. Vorrichtung gemäß einem der Ansprüche 10 bis 15,
**dadurch gekennzeichnet, dass**
die Querschnitte und/oder die Querschnittsformgebungen der einzelnen Ansaugöffnungen (4) abhängig von den jeweiligen Überwachungsräumen (R₁,..., Rₙ) ausgeführt sind.

17. Vorrichtung gemäß einem der Ansprüche 10 bis 16,
**dadurch gekennzeichnet, dass**
die Querschnitte und/oder die Querschnittsformgebungen der einzelnen Abschnitte des Ansaugrohrsystems (3) zwischen dem mindestens einen Detektor (7) und den jeweiligen Überwachungsräumen (R₁,..., Rₙ) abhängig von den jeweiligen Überwachungsräumen (R₁,...,Rₙ) ausgeführt sind.

18. Vorrichtung gemäß einem der Ansprüche 10 bis 17,
**dadurch gekennzeichnet, dass**
die Ansaugvorrichtung (5) und die Ausblasvorrichtung (8) gemeinsam als ein Gebläse (11) ausgebildet sind, das seine Luftförderrichtung in Erwiderung auf ein Steuersignal von der Steuerung (9) ändert.

19. Vorrichtung gemäß Anspruch 18,
**dadurch gekennzeichnet, dass**
das Gebläse (11) ein Lüfter mit Drehrichtungsumkehr ist.

20. Vorrichtung gemäß Anspruch 18,
**dadurch gekennzeichnet, dass**
das Gebläse (11) ein Lüfter mit Lüftungsklappen ist.

21. Verwendung der Vorrichtung gemäß einem der Ansprüche 10 bis 20 als Branderkennungsteil einer Feuerlöschanlage zur Aktivierung der Löschmitteleinleitung in einem der Überwachungsräume (R₁,..., Rₙ).

## Claims

1. Process for detecting and locating a fire and/or the point of origin of a fire in one or more control rooms (R₁, R₂, R₃, ..., Rₙ) with the following process stages:
(a) extraction of a sample of air (6) each from the individual control rooms (R₁, ..., Rₙ) representing the room air of the individual control rooms (R₁, ..., Rₙ) over a common induction pipe system (3);
(b) detection of at least one fire parameter in the air sample (6) drawn in over the induction pipe system (3) with the, as a minimum, one detector (7) for the detection of fire parameters;
***characterised by***
the following process stages:
(c) blowing-out of the drawn-in air samples (6) in the induction pipe system (3) with a blow-out device or suction/blow device (8) if the, as a minimum, one detector (7) has detected at least one fire parameter;
(d) further suction of air samples (6) out of the individual control rooms (R₁, ..., Rₙ) over the induction pipe system (3) at least until the, as a minimum, one detector (7) has again detected a fire parameter in a sample of air (6);
(e) analysis of the delay of the air sample extraction carried out in process stage (d) until the further detection of the fire parameter in order to locate the site of the fire or the point of origin of the fire in one of the many control rooms (R₁, ..., Rₙ); and
(f) emission of a signal indicating the point of origin and/or presence of a fire in one or more of the control rooms (R₁, ..., Rₙ), whereby the signal contains further information on the unique location of the fire in one or more control rooms (R₁, ..., Rₙ).

2. Process according to Claim 1, which further entails the following process stages according to process stage (a):
(a1) determination of the velocity of flow of the air sample (6) in the induction pipe system (3) during the continuous extraction of the relevant air sample (6) from the individual control rooms (R₁, ..., Rₙ); and
(a2) calculation of the time required for the complete blowing-out of the air samples (6) in the induction pipe system (3).

3. Process according to Claim 1 or 2,
***characterised that***
process stage (c) entails the process stage to determine the velocity of flow during the blowing-out in order to calculate the time required for the complete blowing-out of the air samples (6) in the induction pipe system (3).

4. Process according to one of the above claims further entailing the following process stages according to process stage (d):
(d1) determination of the velocity of flow of the air sample (6) in the induction pipe system (3) during the further extraction of the relevant air sample (6) from the individual control rooms (R₁, ..., Rₙ); and
(d2) calculation of the delay of the relevant air sample (6) representing the room air of the individual control rooms (R₁, ..., Rₙ) occurring during the further extraction of the relevant air sample (6) from the individual control rooms (R₁, ..., Rₙ).

5. Process according to one of the above claims,
***characterised that***
the air sample extraction carried out in process stages (a) and (d) is carried out using a suction device (5), whereby the further suction performed in process stage (d) is carried out with reduced induction power in comparison with the induction power of the air sample extraction carried out in process stage (a).

6. Process according to one of the above claims, whereby a further self-adjustment process is performed entailing the following process stage:
(i) artificial generation of a fire parameter in an induction opening (4) of the furthest control room (Rₙ) from the, as a minimum, one detector (7) during the entire time of the self-adjustment process ;
(ii) suction of air samples (6) from the individual control rooms (R₁, ..., Rₙ) over the common induction pipe system (3) until the, as a minimum, one detector (7) detects the artificially generated fire parameter in the drawn-in air samples (6);
(iii) blowing out of the drawn-in air samples (6) in the induction pipe system (3) with a blow-out or suction/blow device (8);
(iv) further suction of air samples (6) out of the individual control rooms (R₁, ..., Rₙ) over the induction pipe system (3) at least until the detector (7) has again detected an artificially generated fire parameter in the air samples (6);
(v) analysis of the delay until the further detection of the artificially generated fire parameter of the further air sample extraction carried out in process stage (iv) in order to determine a maximum time for the induction pipe system;
(vi) calculation of the delays of the relevant air sample (6) representing the room air of the individual control rooms (R₁, ..., Rₙ) occurring for the individual control rooms (R₁, ..., Rₙ) based on the maximum delays determined in process stage (v) and the configuration of the induction pipe system (3), especially the distance between the induction openings (4), the diameter of the induction pipe system and the diameter of the induction openings (4); and
(vii) recording the calculated delays of the relevant air sample (6) in a table.

7. Process according to Claim 6, whereby the self-adjustment process according to process stage (vii) further entails the following process stage:
(viii) use of a correction function in the calculated delays recorded in the table in order to update the delay values occurring for the individual control rooms (R₁, ..., Rₙ).

8. Process according to Claim 6 or 7, whereby the analysis of the delay occurring in the event of a fire is carried out by comparing the delay occurring with the delays calculated in the self-adjustment process and recorded in the table.

9. Process according to one of the above claims, whereby the analysis of the delay occurring in the event of a fire is carried out by comparing the delay occurring with relevant theoretically calculated delays for the individual control rooms (R₁, ..., Rₙ) which depend on at least one of the following: the length of the relevant sections of the induction pipe system (3) between the, as a minimum, one detector (7) and the induction openings (4) of the relevant control rooms (R₁, ..., Rₙ) in the induction pipe system (3); the effective flow area of the induction pipe system (3) and/or the relevant sections of the induction pipe system (3) between the, as a minimum, one detector (7) and the induction openings (4) of the relevant control rooms (R₁, ..., Rₙ), and the velocity of flow of the air sample (6) in the induction pipe system (3) between the, as a minimum, one detector (7) and the induction openings (4) of the relevant control rooms (R₁, ..., Rₙ).

10. Fire detection device to detect and locate a fire and/or the point of origin of a fire in one or more control rooms (R₁, ..., Rₙ) with an induction pipe system (3) connecting the control rooms (R₁, ..., Rₙ), which communicates with each individual control room (R₁, ..., Rₙ) over at least one induction opening (4) each, a suction device (5) to extract air samples (6) out of the individual control rooms (R₁, ..., Rₙ) representing the room air of the individual control rooms (R₁, ..., Rₙ) over the induction pipe system (3) and the induction openings (4), and with at least one detector (7) to detect at least one fire parameter in the air samples (6) sucked out over the induction pipe system (3),
***characterised by***
- a blow-out device (8) to blow out the drawn-in air samples (6) in the induction pipe system (3) if the, as a minimum, one detector (7) detects at least one fire parameter in the drawn-in air samples (6),
- mechanisms (9, 10) to control the suction device (5) and the blow-out device (8) such that one air sample (6) each is further extracted from the individual control rooms (R₁, ..., Rₙ) over the induction pipe system (3) after all the air samples (6) have been blown out of the induction pipe system (3);
- a mechanism to measure the delay until the, as a minimum, one detector (7) further detects a fire parameter in the air samples (6),
- a mechanism (10) to analyse the measured delay in order to locate the fire; and by
- at least one display element which will identify the location of the fire in one of the control rooms (R₁, ..., Rₙ) and/or by a communication device over which information on the point of origin and/or the presence of a fire in one or more of the control rooms and on the unique localization of the fire in one or more of the control rooms is transferred to a location remote from the device.

11. Device according to Claim 10,
***characterised** that*
the mechanisms to control the suction device (5) and the blow-out device (8) contain a control mechanism (9) for the time-coordinated control of the suction device (5) and the blow-out device (8) in compliance with a signal emitted by the detector (7), if the, as a minimum, one detector (7) detects at least one fire parameter in the air sample (6).

12. Device according to Claim 10 or 11,
***characterised by***
a storage device to store the delay values.

13. Device according to Claims 10 to 12,
***characterised by***
at least one smoke generator which is placed next to an induction opening (4) and artificially generates a fire parameter for the setting and testing of the fire detection device.

14. Device according to Claims 10 to 13,
***characterised by***
at least one sensor (12) for measuring the velocity of flow of the air samples (6) in the induction pipe system.

15. Device according to Claims 10 to 14,
***characterised by***
a processor (10) for analysing the signal emitted by the detector (7) if the, as a minimum, one detector (7) detects a fire parameter in the air sample (6) and a control signal emitted by the control (9) to the suction device (5) and/or blow device (8).

16. Device according to Claims 10 to 15,
***characterised that***
the areas and/or the area-forming operations of the individual induction openings (4) are reproduced according to the relevant control rooms (R₁, ..., Rₙ).

17. Device according to Claims 10 to 16,
***characterised that***
the areas and/or the area forming operations of the individual sections of the induction pipe system (3) between the, as a minimum, one detector (7) and the relevant control rooms (R₁, ..., Rₙ) are reproduced according to the relevant control rooms (R₁, ..., Rₙ).

18. Device according to Claims 10 to 17,
***characterised that***
the suction device (5) and the blow-out device (8) are developed together as a blower (11), which changes its air conveyance direction in response to a control signal from the control mechanism (9).

19. Device according to Claim 18,
***characterised that***
the blower (11) is a fan with reversal of direction of rotation.

20. Device according to Claim 18,
***characterised that***
the blower (11) is a fan with dampers.

21. Use of the device according to one of Claims 10 to 20 as a fire detection component of a fire extinguisher for activating the fire-extinguishing agent release in one of the control rooms (R₁,..., Rₙ).

## Revendications

1. Procédé pour reconnaître et localiser un incendie et/ou la naissance d'un incendie dans un ou plusieurs espaces à surveiller (R₁, R₂, R₃, ..., Rₙ), comprenant les étapes suivantes :
a) prélèvement d'un échantillon d'air (6) respectif, représentant l'air ambiant des espaces de surveillance individuels (R₁, ..., Rₙ), hors des espaces de surveillance individuels (R₁, ..., Rₙ) via un système de tubes d'aspiration (3) commun ;
b) mise en évidence d'au moins une grandeur caractéristique d'incendie dans les échantillons d'air (6) aspirés via le système de tubes d'aspiration (3) par au moins un détecteur (7) destiné à mettre en évidence des grandeurs caractéristiques d'incendie ;
**caractérisé par** les étapes suivantes :
c) soufflage des échantillons d'air (6) aspirés et situés dans le système de tubes d'aspiration (3) au moyen d'un dispositif de soufflage ou d'un dispositif d'aspiration/soufflage (8) lorsque ledit au moins un détecteur (7) a mis en évidence au moins une grandeur caractéristique d'incendie ;
d) nouvelle aspiration d'échantillons d'air (6) depuis les espaces de surveillance individuels (R₁, ..., Rₙ) via le système de tubes d'aspiration (3), au moins jusqu'à ce que ledit au moins un détecteur (7) met de nouveau en évidence une grandeur caractéristique d'incendie dans un échantillon d'air (6) ;
e) évaluation du temps de parcours du nouveau prélèvement d'échantillon d'air effectué dans l'étape d), temps qui s'écoule jusqu'à la nouvelle mise en évidence de la grandeur caractéristique d'incendie, afin de localiser l'endroit de l'incendie ou l'endroit de la naissance de l'incendie dans l'un parmi la multitude d'espaces de surveillance (R₁, ..., Rₙ) ; et
f) émission d'un signal qui indique la naissance et/ou la présence d'un incendie dans un ou dans plusieurs espaces de surveillance (R₁, ..., Rₙ), le signal contenant en outre une information pour la localisation univoque de l'incendie dans l'un ou dans plusieurs espaces de surveillance (R₁, ..., Rₙ).

2. Procédé selon la revendication 1, qui comprend en outre les étapes suivantes après l'étape a) :
a1) détermination de la vitesse d'écoulement de l'échantillon d'air (6) dans le système de tubes d'aspiration (3) pendant le prélèvement continu de l'échantillon d'air respectif (6) depuis les espaces de surveillance individuels (R₁, ..., Rₙ) ; et
a2) calcul du temps nécessaire pour souffler complètement les échantillons d'air (6) situés dans le système de tubes d'aspiration (3).

3. Procédé selon la revendication 1 ou 2,
**caractérisé en ce que** l'étape c) présente l'étape de la détermination de la vitesse d'écoulement pendant le soufflage, afin de calculer le temps nécessaire pour le soufflage complet des échantillons d'air (6) situés dans le système de tubes d'aspiration (3).

4. Procédé selon l'une des revendications précédentes, qui comprend en outre les étapes suivantes après l'étape d) :
d1) détermination de la vitesse d'écoulement des échantillons d'air (6) dans le système de tubes d'aspiration (3) pendant le nouveau prélèvement de l'échantillon d'air respectif (6) depuis les espaces de surveillance individuels (R₁, ..., Rₙ) ; et
d2) calcul du temps de parcours de l'échantillon d'air (6) respectif représentant l'air ambiant de l'espace de surveillance individuel (R₁, ..., Rₙ), temps qui s'écoule pendant le nouveau prélèvement de l'échantillon d'air respectif (6) depuis les espaces de surveillance individuels (R₁, ..., Rn).

5. Procédé selon l'une des revendications précédentes,
**caractérisé en ce que**
le prélèvement d'échantillon d'air effectué dans les étapes a) et d) s'effectue au moyen d'un dispositif d'aspiration (5), la nouvelle aspiration réalisée dans l'étape d) s'effectue avec une puissance d'aspiration réduite par comparaison à la puissance d'aspiration du prélèvement d'échantillon d'air réalisé dans l'étape a).

6. Procédé selon l'une des revendications précédentes, qui met en oeuvre en outre un processus pour l'auto-ajustement, qui comprend les étapes suivantes :
i) génération artificielle d'une grandeur caractéristique d'incendie au niveau d'une ouverture d'aspiration (4) de l'espace de surveillance (Rₙ) le plus éloigné dudit au moins un détecteur (7) pendant la totalité du temps du processus d'auto-ajustement ;
ii) aspiration d'échantillons d'air (6) depuis les espaces de surveillance individuels (R₁, ..., Rₙ) via le système de tubes d'aspiration commun (3) jusqu'à ce que ledit au moins un détecteur (7) mette en évidence la grandeur caractéristique d'incendie, générée artificiellement, dans les échantillons d'air aspirés (6) ;
iii) soufflage des échantillons d'air (6) aspirés et situés dans le système de tubes d'aspiration (3) au moyen d'un dispositif de soufflage ou d'un dispositif d'aspiration/soufflage (8) ;
iv) nouvelle aspiration d'échantillons d'air (6) depuis les espaces de surveillance individuels (R₁, ..., Rₙ) via le système de tubes d'aspiration (3), au moins jusqu'à ce que ledit détecteur (7) mette de nouveau en évidence une grandeur caractéristique d'incendie générée artificiellement dans les échantillons d'air (6) ;
v) évaluation du temps de parcours du nouveau prélèvement d'échantillon d'air effectué dans l'étape iv), temps qui s'écoule jusqu'à la nouvelle mise en évidence de la grandeur caractéristique d'incendie générée artificiellement, afin de déterminer un temps de parcours maximal pour le système de tubes d'aspiration ;
vi) calcul des temps de parcours de l'échantillon d'air (6) respectif représentant l'air ambiant de l'espace de surveillance individuel (R₁, ..., Rₙ) pour les espaces de surveillance individuels (R₁, ..., Rₙ), en se basant sur le temps de parcours maximal déterminé dans l'étape v) et sur la configuration du système de tubes d'aspiration (3), en particulier sur la distance des ouvertures d'aspiration (4), sur le diamètre du système de tubes d'aspiration et sur le diamètre des ouvertures d'aspiration (4) ; et
vii) enregistrement dans un tableau des temps de parcours calculés des échantillons d'air respectifs (6).

7. Procédé selon la revendication 6, le processus d'auto-ajustement présentant, après l'étape vii), en outre l'étape suivante :
viii) application d'une fonction de correction aux temps de parcours calculés enregistrés dans le tableau pour actualiser les valeurs de temps de parcours qui s'écoulent pour les espaces de surveillance individuels (R₁, ..., Rₙ).

8. Procédé selon la revendication 6 ou 7, dans lequel l'évaluation du temps de parcours s'écoulant en cas d'incendie s'effectue par comparaison du temps de parcours écoulé aux temps de parcours respectifs calculés enregistrés dans le tableau pendant le processus d'auto-ajustement.

9. Procédé selon l'une des revendications précédentes, dans lequel l'évaluation du temps de parcours écoulé s'effectue par comparaison au temps de parcours écoulé à des temps de parcours respectifs calculés théoriquement pour les espaces de surveillance individuels (R₁, ..., Rₙ), qui dépendent de l'un au moins des paramètres suivants : longueur des tronçons respectifs du système de tubes d'aspiration (3) entre ledit au moins un détecteur (7) et les ouvertures d'aspiration (4), prévues dans le système de tubes d'aspiration (3), des espaces de surveillance respectifs (R₁, ..., Rₙ) ; section d'écoulement effective du système de tubes d'aspiration (3) et/ou des tronçons respectifs du système de tubes d'aspiration (3) entre ledit au moins un détecteur (7) et les espaces de surveillance respectifs (R₁, ..., Rₙ) ; et vitesse d'écoulement de l'échantillon d'air (6) dans le système de tubes d'aspiration (3) et/ou dans les tronçons respectifs du système de tubes d'aspiration (3) entre ledit au moins un détecteur (7) et les ouvertures d'aspiration (4) des espaces de surveillance respectifs (R₁, ..., Rₙ).

10. Dispositif de reconnaissance d'incendie pour reconnaître et localiser un incendie et/ou la naissance d'un incendie dans un ou plusieurs espaces à surveiller (R₁, ..., Rₙ), comportant un système de tubes d'aspiration (3) reliant les espaces de surveillance (R₁, ..., Rₙ) et communiquant avec chaque espace de surveillance individuel (R₁, ..., Rₙ) via au moins une ouverture d'aspiration respective (4), un dispositif d'aspiration (5) pour prélever via le système de tubes d'aspiration (3) et via les ouvertures d'aspiration (4), depuis les espaces de surveillance individuels (R₁, ..., Rₙ), les échantillons d'air (6) représentant chacun l'air ambiant des espaces de surveillance individuels (R₁, ..., Rₙ), et comportant au moins un détecteur (7) pour mettre en évidence au moins une grandeur caractéristique d'incendie dans les échantillons d'air (6) aspirés via le système de tubes d'aspiration (3),
**caractérisé par**
- un dispositif de soufflage (8) pour souffler les échantillons d'air (6) aspirés dans le système de tubes d'aspiration (3) lorsque ledit au moins un détecteur (7) met en évidence au moins une grandeur caractéristique d'incendie dans les échantillons d'air aspirés (6),
- des moyens (9, 10) pour commander le dispositif d'aspiration (5) et le dispositif de soufflage (8) de telle sorte qu'un échantillon d'air respectif (6) depuis les espaces de surveillance individuels (R₁, ..., Rₙ) est de nouveau prélevé via le système de tubes d'aspiration (3), une fois que tous les échantillons d'air (6) sont soufflés hors du système de tubes d'aspiration (3) ;
- des moyens pour mesurer le temps de parcours jusqu'à ce que ledit au moins un détecteur (7) mette de nouveau en évidence une grandeur caractéristique d'incendie dans les échantillons d'air (6) ;
- des moyens (10) pour évaluer le temps de parcours mesuré, afin de localiser l'endroit de l'incendie ; et par
- au moins un élément indicateur susceptible d'identifier l'endroit de l'incendie dans l'un des espaces de surveillance (R₁, ..., Rₙ) et/ou par un dispositif de communication via lequel une information relative à la naissance et/ou à la présence d'un incendie dans l'un ou dans plusieurs espaces de surveillance et relative à la localisation univoque de l'incendie dans un ou dans plusieurs espaces de surveillance est transmise à un emplacement éloigné du dispositif.

11. Dispositif selon la revendication 10,
**caractérisé en ce que**
les moyens pour commander le dispositif d'aspiration (5) et le dispositif de soufflage (8) comprennent une commande (9) pour la commande coordonnée dans le temps du dispositif d'aspiration (5) et du dispositif de soufflage (8), en coïncidence avec un signal émis par le détecteur (7), lorsque ledit au moins un détecteur (7) met en évidence au moins une grandeur caractéristique d'incendie dans les échantillons d'air (6).

12. Dispositif selon la revendication 10 ou 11,
**caractérisé par**
un moyen de mémorisation pour mémoriser des valeurs de temps de parcours.

13. Dispositif selon l'une des revendications 10 à 12,
**caractérisé par**
au moins un générateur de fumées qui est agencé au niveau d'une ouverture d'aspiration (4) et qui génère de manière artificielle une grandeur caractéristique d'incendie afin de régler et de vérifier le dispositif de reconnaissance d'incendie.

14. Dispositif selon l'une des revendications 10 à 13,
**caractérisé par**
au moins un capteur (12) pour mesurer la vitesse d'écoulement des échantillons d'air (6) dans le système de tubes d'aspiration.

15. Dispositif selon l'une des revendications 10 à 14,
**caractérisé par**
un processeur (10) pour évaluer un signal émis par le détecteur (7) lorsque ledit au moins un détecteur (7) met en évidence une grandeur caractéristique d'incendie dans l'échantillon d'air (6), et un signal de commande émis par la commande (9) au dispositif d'aspiration (5) et/ou au dispositif de soufflage (8).

16. Dispositif selon l'une des revendications 10 à 15,
**caractérisé en ce que**
les sections transversales et/ou les configurations en section transversale des ouvertures d'aspiration individuelles (4) sont réalisées en fonction des espaces de surveillance respectifs (R₁, ..., Rₙ).

17. Dispositif selon l'une des revendications 10 à 16,
**caractérisé par**
les sections transversales et/ou les conformations en section transversale des tronçons individuels du système de tubes d'aspiration (3) entre ledit au moins un détecteur (7) et les espaces de surveillance respectifs (R₁, ..., Rₙ) sont réalisées en fonction des espaces de surveillance respectifs (R₁, ..., Rₙ).

18. Dispositif selon l'une des revendications 10 à 17,
**caractérisé en ce que**
le dispositif d'aspiration (5) et le dispositif de soufflage (8) sont réalisés conjointement sous la forme d'une soufflante (11) qui modifie sa direction de refoulement d'air en réponse à un signal de commande issu de la commande (9).

19. Dispositif selon la revendication 18,
**caractérisé en ce que**
la soufflante (11) est un ventilateur à inversion de sens de rotation.

20. Dispositif selon la revendication 18,
**caractérisé en ce que**
la soufflante (11) est un ventilateur à clapets d'aération.

21. Utilisation du dispositif selon l'une des revendications 10 à 20 à titre de partie de reconnaissance d'incendie d'une installation d'extinction de feu pour activer l'introduction de l'agent d'extinction dans l'un des espaces de surveillance (R₁, ..., Rₙ).
